# EUROPEAN PATENT APPLICATION

(11) **EP 4 843 454 A1**
(43) Date of publication of application: **25.11.2026**
(21) Application number: 26180406.6
(22) Date of filing: 21.05.2026
(51) Int. Cl.: A47J 31/06

(54) **FILTER, MACHINE AND PROCESS FOR PREPARING AND DISPENSING HERBAL TEAS**

(30) Priority: 22.05.2025 IT 202500011677
(71) Applicant: Wilden S.r.l., 20154 Milano (MI) (IT)
(72) Inventor: MONTI, Emanuele, 20154 Milano (MI) (IT)
(74) Representative: Simino, Massimo

(57) **Abstract**

A filter for a machine for preparing and dispensing of herbal teas comprises a containing body (5) delimited by a bottom (2) and by a side wall (3), which forms with said bottom (2) a compartment (4) for containing a predetermined dose of herbal tea plant preparation, said filter comprising a discharge opening (6) for discharging liquid from said containing body (5) comprising at least a first section having a maximum passage area of 0.71 mm², so as to allow a controlled and slowed discharge of pressurized liquid from said compartment (4) of said containing body (5), in the compartment (4) of the containing body a filtering element (7) being housed having a filtering capacity of 150 µm, to filter and eliminate solid particles having a grain size greater than 150 µm from the filtered liquid.

## Description

### Field of the invention

The present invention relates to a filter for a machine for preparing and dispensing herbal teas, as well as to a machine for preparing and dispensing herbal teas and to a process for preparing and dispensing herbal teas.

Within the scope of the present description and the following claims, the term herbal teas is used generically to refer to an infusion or a decoction of one or more plant substances. For example, reference is made to herbal teas of chamomile, linden, thyme, lemon balm and/or other plants or parts of plants.

It should be noted that the term herbal tea is also used generically to refer to tea, which is an infusion based on the use of plant parts of the tea plant.

### Background of the invention

Generally, the plant parts used for preparing herbal teas comprise leaves, seeds, fruits, flowers, roots, bark and/or twigs, used alone or in mixture with one another, also from different typologies of plants.

The herbal teas are obtained by infusing or boiling various plant parts of different types of plants and are generally prepared by users in the home using water kettles. Differently, outside the home, the consumption of herbal teas is not widespread, since it requires the presence of kettles or other means for heating water, for example up to boiling temperature. Generally, in restaurants and similar food-service establishments, serving herbal teas to customers is possible for consumption at the table, or in any case when the customer has sufficient time to allow the infusion to brew once they are provided with a container containing boiling water, such as a teapot, and the plant parts to be used for the infusion, preferably already contained in filter bags.

In view of the above, it is therefore evident that today the need to produce an herbal tea quickly and substantially instantaneously is not met, as is the case, for example, for preparing and sale of espresso coffee, the preparation of which requires no more than thirty seconds.

This is a direct consequence of the fact that espresso coffee is prepared by extracting certain substances from ground coffee powder in water at a pressure between 8 bar and 11 bar, while the preparation of a herbal tea, as carried out today, is obtained by infusing plant material in heated water at atmospheric pressure and generally requires a longer period of time in order to be effective. Furthermore, it should be considered that today in food-service establishments such as bars, restaurants and the like, there are machines for preparing espresso coffee and the like. Although highly efficient and high performing, these machines are suitable only for producing coffee and similar beverages, as they enable the aforesaid hot extraction of coffee from ground coffee powder, substantially by percolation.

At most, the currently known machines for preparing espresso coffee allow to broaden their production spectrum to the preparation of beverages such as, for example, barley coffee, ginseng coffee and similar products, which involve preparing the beverage starting from the use of powdered, water-soluble or lyophilized products, which do not require a prolonged infusion phase be carried out as required for preparing of a herbal tea.

The objective fact is that the currently known machines for preparing espresso coffee are not suitable for preparing herbal teas, as they are not able to carry out a correct infusion process of the plant parts to be used for preparing herbal teas, allowing a correct infusion process only when the raw material used is coffee powder or another water-soluble and/or lyophilized product.

A further, greatly felt need is to be able to quickly prepare an herbal tea, or other infusion, having a volume and presentation similar to that of espresso coffee, i.e. according to quantities comparable to those of an espresso cup or a cappuccino cap, starting from plant parts specially prepared for this purpose.

A further need is to be able to prepare an herbal tea using a traditional espresso machine with non-invasive modifications to the structure of the espresso machine and its operating mode.

### Summary of the invention

The problem underlying the present invention is that of devising a filter for a machine for preparing herbal teas, which is adapted to be used in a machine for preparing espresso coffee, so as to allow with the use of such an espresso coffee machine the rapid and efficient preparation of the most varied types of herbal teas starting from the most varied herbal tea plant preparations, so as to meet the aforesaid needs and at the same time obviating the drawbacks referred to with reference to the machines of the prior art.

Such a problem is solved by a filter for a machine for preparing and dispensing herbal teas in accordance with claim 1.

In accordance with a further aspect, this problem is also solved by a machine for preparing and dispensing herbal teas in accordance with claim 10, as well as by a process for preparing herbal teas in accordance with claim 13, starting from the most varied herbal tea plant preparations, in a rapid and substantially instantaneous manner as in the preparation of espresso coffee.

### Brief description of the figures

Further features and advantages of the present invention will emerge from the description given below of some preferred embodiments thereof, given by way of nonlimiting example, with reference to the accompanying figures, in which:

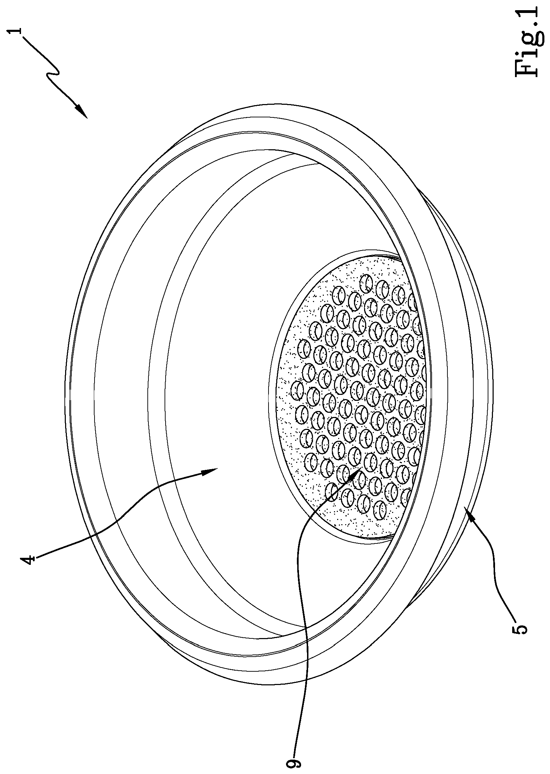

- Figure 1 depicts a top perspective view of a filter according to the invention;
- Figure 2 depicts a bottom perspective view of the filter of Figure 1;

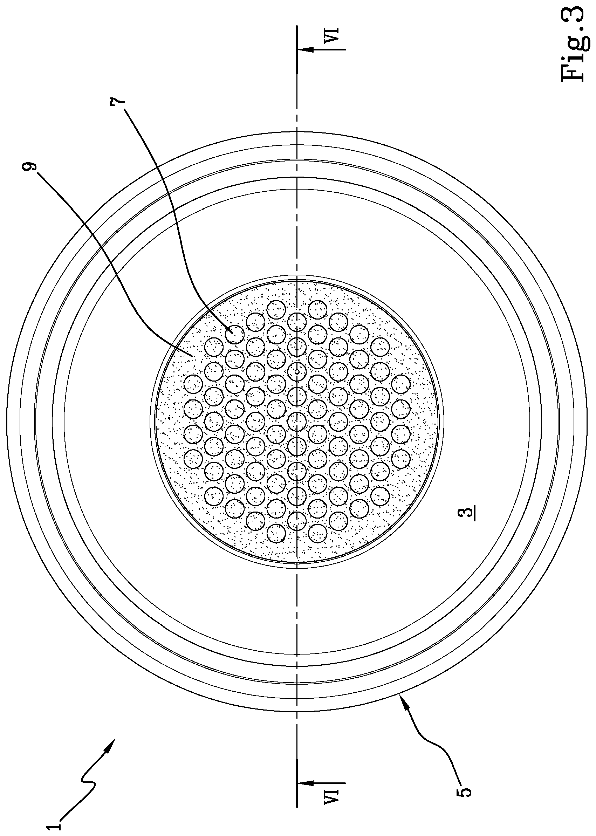

- Figure 3 depicts a top plan view of the filter of Figure 1;
- Figure 4 depicts a bottom plan view of the filter of Figure 1;
- Figure 5 depicts an exploded perspective view of the filter of Figure 1 and

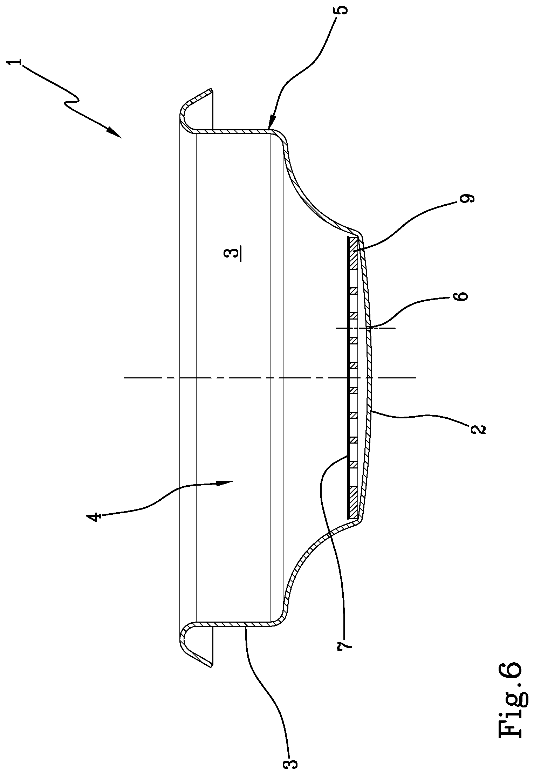

- Figure 6 depicts a plan view in section.

### Detailed description of the invention

With reference to the accompanying figures, 1 generically denotes a filter according to the invention for a machine for preparing and dispensing herbal teas.

In particular, said machine for preparing herbal teas can conveniently be a common machine for preparing espresso coffee, or other similar machine, which is why such a machine is not illustrated in the figures since this type of machine is well known to a person skilled in the art. In a conventional manner, the machine which can be used for preparing herbal teas is therefore a machine for preparing espresso coffee which comprises a machine body with which are associated:
- a dispensing device comprising a containing chamber extending in a predetermined axial direction between an upper opening and a bottom wall provided with an opening for dispensing liquid outwards;
- a filter housed in the aforesaid containing chamber of said dispensing device;
- a hydraulic pump for pumping pressurized water in said containing chamber through said upper opening by means of a first pressurized water supply line;
- a second water supply line from a tank or a water mains to said hydraulic pump for supplying pressurized water into said containing chamber and
- heating means for heating the water pumped to said dispensing device through said water supply line.

Advantageously, the aforesaid dispensing device can be a filter-holder cup of a machine for preparing espresso coffee, which is removably attachable to the body of the machine to receive pressurized hot water therein. Inside the aforesaid filter-holder cup, the filter 1 according to the invention is advantageously housed, which comprises a containing body 5, in which:
- said containing body 5 comprises a bottom 2 from which a side wall 3 projects, which forms with said bottom 2 a compartment 4 for containing a predetermined dose of herbal tea plant preparation, the end of said side wall 3 most distal from said bottom 2 delimiting an upper opening of said compartment 4 through which a dose of herbal tea plant preparation and water for infusion is allowed to be introduced into said compartment 4;
- said containing body 5 comprises a discharge opening 6 for discharging liquid from said containing body 5 and
- a filtering element 7 is housed in said containing body 5 upstream of said discharge opening 6 to filter the liquid dispensed from said containing body 5 through said discharge opening 6.
It should be noted that the aforesaid filter 1 is intended to be housed and retained in the containing chamber of the dispensing device of the machine for preparing herbal teas, i.e., in the filter-holder cup, so as to have:
- the bottom 2 positioned in proximity to the bottom wall of the containing chamber of the dispensing device and
- the upper opening positioned in substantial proximity to the upper opening of the containing chamber of the dispensing device.

Preferably, the aforesaid filtering element 7 is the only filtering element provided in the compartment 4 of the containing body 5 and above it, i.e., no other liquid filtering means are provided between the filtering element 7 and the upper opening of said compartment 4. Advantageously:
- the discharge opening 6 of the filter 1 comprises at least a first section having a maximum passage area lower than or equal to 0.072 mm² and greater than or equal to 0.049 mm², so as to allow a controlled and slowed discharge of pressurized liquid from said compartment 4 of said containing body 5 and ensure a sufficient infusion time of said dose of herbal tea plant preparation in said liquid inside said containing body 5.
- the aforesaid filtering element 7 has a filtering capacity of at least 150 µm, to filter and eliminate solid particles having a grain size or other size greater than 150 µm from the filtered liquid.

Preferably, the aforesaid first section of the discharge opening 6 of the filter 1 consists of a single calibrated hole having a diameter D which satisfies the following relationship: 250 µm ≤ D ≤ 303 µm, preferably said first section of said discharge opening 6 consists of a hole having a diameter D which satisfies the following relationship: 250 µm ≤ D ≤ 303 µm.

Alternatively, it is possible to provide more than one calibrated hole, always in compliance with the total passage area indicated above, for example it is possible to provide for the presence of two distinct calibrated holes, each having a respective diameter D₁ and D₂ the summation of which satisfies the following relationship: 250 µm ≤ (D₁ + D₂) ≤ 303 µm.

Preferably, the aforesaid discharge opening 6 is a discharge opening obtained in the bottom 2 of the filter 1.

In accordance with an alternative embodiment not illustrated:
- the aforesaid first section of the discharge opening of the filter 1 having a maximum passage area lower than or equal to 0.072 mm² and greater than or equal to 0.049 mm² is obtained in a disk inserted in a sealed manner between the bottom of the containing body of the filter and the aforesaid filtering element and
- in the bottom of the filter at least one draining passage is formed, preferably having an area of at least 5 mm², to allow the liquid to be drained by gravity from the bottom of said containing body.

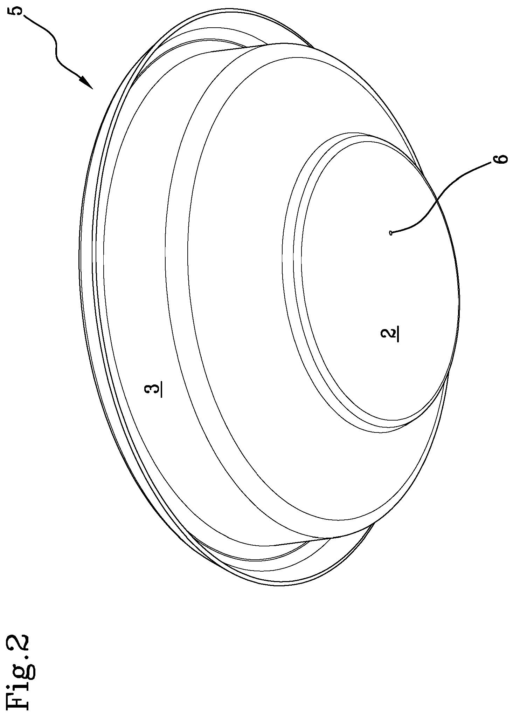

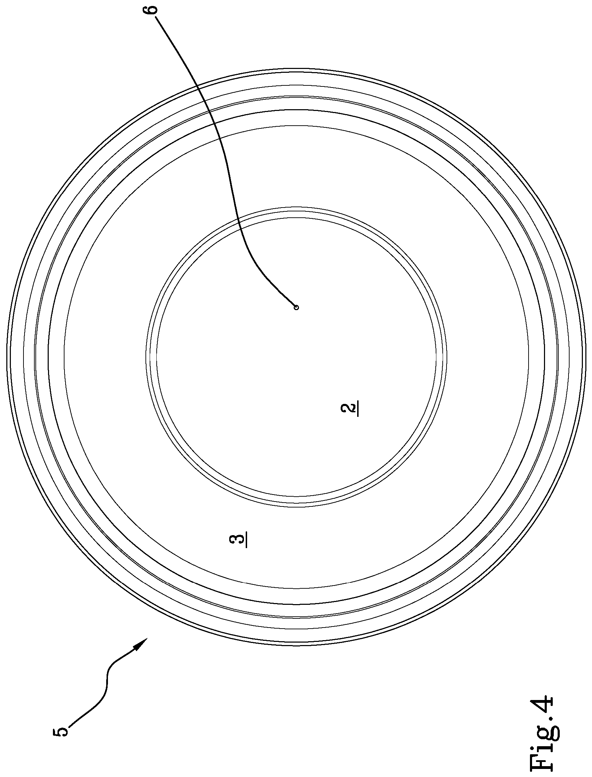

Preferably:
- the bottom 2 of the filter 1 has a concavity facing the compartment 4 of the containing body 5 and
- the discharge opening 6 of the filter is formed in a side concave portion of said bottom 2, therefore in a position spaced from the central portion of said concavity. More specifically, as shown in the images (for example, see Figures 2 and 4) the calibrated hole forming the discharge opening 6 is positioned in a non-central position of the bottom 2 of the filter 1, so that, with reference to a vertical line perpendicular to the bottom 2 of the filter 1, this discharge opening 6 is located at a portion of the concave bottom 2 which is not perpendicular to this vertical line. In use, as will be more clear in the following of the present description, this allows to emit a pressurized jet of water (herbal tea) oriented towards the side of the containing body 5 and not oriented along the aforesaid vertical line perpendicular to the bottom 2 of the filter 1, so that the pressurized jet exiting from the filter 1 loses a part of its kinetic energy, rotating inside the filter-holder cup of the machine before being dispensed from the liquid dispensing opening of the dispensing device.

Preferably, the aforesaid filtering element has a filtering capacity between 100 µm and 160 µm, more preferably it has a filtering capacity of 150 µm.

Preferably, the aforesaid filtering element 7 is associated with a support element 9 positioned in said filter further inside said compartment 4 towards said bottom 2 with respect to said filtering element 7.

Preferably, the aforesaid support element 9 is provided with a plurality of openings/holes so as not to hinder the passage of liquid. This allows offering a valid support to the filtering element 7 inside the compartment 4 of the containing body 5.

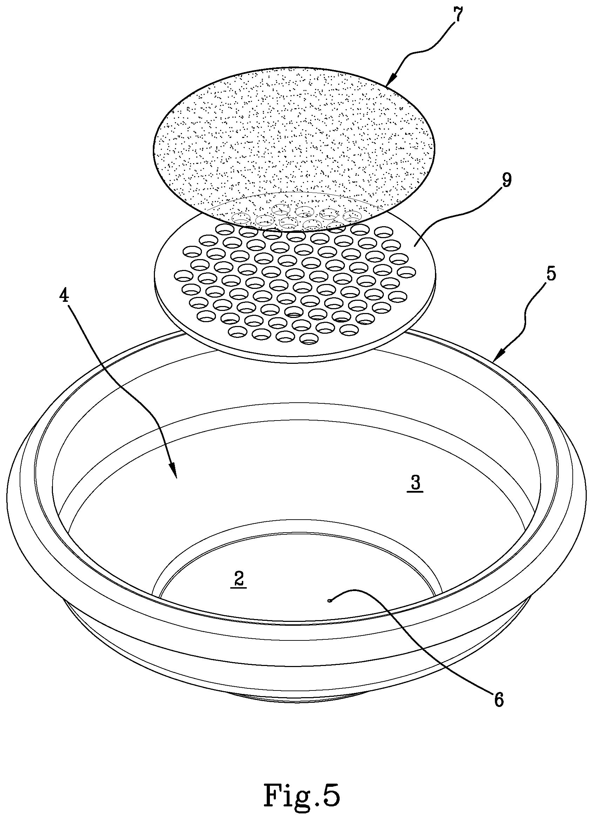

In accordance with the illustrated embodiment (see Figure 5), the aforesaid support element is formed by a metal disk, of suitable thickness, for example 0.8 mm or more, provided with the aforesaid plurality of openings/holes, in the example a plurality of circular holes.

In accordance with the illustrated embodiment, the aforesaid filtering element 7 is a filtering membrane applied, preferably by welding, to the aforesaid support element 9 to be supported inside said compartment 4.

Preferably, the aforesaid hydraulic pump of the machine for preparing and dispensing herbal teas is dimensioned to pump in the containing chamber, and therefore in the compartment 4 of the containing body 5 of the filter 1, a flow rate of pressurized water greater than the flow rate of liquid dispensable through the aforesaid at least one first section of the discharge opening 6 of the filter 1, this resulting in an increase in the pressure inside the compartment 4.

Preferably, the aforesaid hydraulic pump of the machine for preparing and dispensing herbal teas provides to pump water into the aforesaid water supply line at a liquid pressure between 7 bar and 10 bar, more preferably at a pressure between 8 bar and 9 bar.

As mentioned, the aforesaid machine for preparing and dispensing herbal teas is a common espresso coffee machine, and the dispensing device is a filter holder of a machine for preparing espresso coffee.

In accordance with another aspect of the present invention, **the process** according to the invention for preparing and dispensing herbal teas starting from a dose of herbal tea plant preparation, by means of the machine for preparing and dispensing herbal teas described above comprises the steps of:
- arranging a machine for preparing and dispensing herbal teas as described above with a filter 1 as described above housed inside the dispensing device (the filter-holder cup);
- arranging an herbal tea plant preparation;
- inserting a dose of said herbal tea preparation in said containing chamber inside the compartment 4 of the containing body 5 of said filter 1 and
- pumping into the compartment 4 of the containing body 5 of said filter 1 heated water at a liquid pressure between 7 bar and 10 bar, more preferably at a pressure between 8 bar and 9 bar, and with a flow rate of pressurized water greater than the flow rate of liquid dispensable through said at least one first section of said discharge opening 6 of said filter 1 to carry out a pressurized infusion step of said dose of said herbal tea preparation in said heated water, so as to produce a herbal tea dispensed through said discharge opening 6 of said containing body 5 and through said opening for dispensing liquid outwards of said dispensing device.

Preferably, the aforesaid dose of herbal tea preparation inserted in said compartment 4 of the containing body 5 of the filter 1 is an amount between 1 g and 8 g of herbal tea preparation, more preferably an amount between 1.5 g and 4 g of herbal tea preparation, even more preferably an amount between 1.5 g and 2.5 g of herbal tea preparation.

Preferably, said herbal tea preparation consists of leaves, seeds, fruits, flowers, roots, bark and/or twigs used alone or in mixture with one another, also of different typologies of plants.

Preferably, the aforesaid heated water pumped into said containing chamber has a temperature between 80°C and 99°C, more preferably has a temperature between 85°C and 98°C and even more preferably has a temperature between 89°C and 95°C.

In the use of the filter 1 and the machine for preparing and dispensing herbal teas described above, it is evident that the presence of a discharge opening 6 for discharging liquid from the compartment 4 of the containing body 5 of the filter 1 having the aforesaid calibrated discharge opening 6 allows a controlled and slowed emptying of the liquid from said compartment, and only upon reaching a pressure of the liquid such as to force the liquid, i.e., the herbal teas to pass through the aforesaid first small section of the discharge opening.

This results in a filling of the compartment 4 of the filter 1 with liquid, where the dose of herbal tea plant preparation is present.

The fact that pressurized water is introduced into the aforesaid compartment 4 and that the discharge opening 6 has at least one first section having a reduced section causes the liquid (water) to accumulate even within the compartment 4, reaching substantially the same pressure as the water introduced by the machine pump.

This implies that the infusion of the dose of herbal tea preparation inside the compartment 4 of the filter 1 takes place not only at high temperature (the water introduced by the pump is heated to the desired process temperature) but also pressurized, substantially at the same pressure imposed by the water supply pump in the filter compartment where the dose of herbal tea preparation is located.

This hot and pressurized infusion results in a significant reduction in the infusion times required, allowing the preparation of an optimal herbal tea even in less than 60 seconds.

The presence of the filtering element prevents the plant preparation from being dispensed from the discharge opening 6 of the filter 1 or from obstructing such a discharge opening, particularly at the first section having a maximum passage area lower than or equal to 0.072 mm² and greater than or equal to 0.049 mm² which, being very small, could easily clog, also in consideration of the high pressure of the liquid inside the compartment 4 of the filter 1.

As can be appreciated from what has been described, both the filter according to the invention for a machine for preparing and dispensing herbal teas, and the machine according to the invention for preparing and dispensing herbal teas, as well as the process according to the invention for preparing and dispensing herbal teas starting from a herbal tea plant preparation, each allow to meet the aforesaid needs and to simultaneously overcome the drawbacks referred to in the introductory part of the present description with reference to the prior art.

In fact, following studies and numerous experimental tests carried out, it emerged that by performing the infusion of the herbal tea plant preparations according to the parameters and/or according to the previously described methods, it emerged that it is possible to prepare excellent herbal teas, also from the organoleptic point of view perceived by consumers, even in a rather limited preparation time, generally not exceeding 60 seconds and therefore substantially comparable with the time for preparing an espresso coffee by means of an instant machine for preparing espresso coffee.

This depends on the infusion parameters applied, specifically the pressure at which the infusion can take place, the grain size and the quantity of the herbal tea preparations used which, while not altering the quality of the prepared herbal tea, allows the preparation of an equal, if not in some cases better, herbal tea than those prepared with previously known infusion procedures which required a time span of several minutes.

Therefore, the process according to the invention for preparing a herbal tea or other infusion allows to be implemented in an espresso machine of the traditional type, it being sufficient to provide for the replacement of the filter normally used for preparing espresso coffee, which would not be suitable for preparing a herbal tea, with a filter according to the invention as described above. According to the present invention it is therefore possible to prepare a herbal tea or other infusion having a volume and presentation and uses similar to those of espresso coffee, i.e. in quantities comparable to those of an espresso cup or a cappuccino cup, with slightly higher production times than those envisaged for preparing a coffee or a cappuccino by means of an espresso coffee machine.

Obviously, a person skilled in the art can make numerous modifications and variations to what is described above so as to satisfy contingent and specific requirements, all of which are contained in the scope of protection of the invention as defined by the following claims.

## Claims

1. **Filter (1)** for a machine for preparing and dispensing herbal teas comprising a containing body (5), wherein:
- said containing body (5) comprises a bottom (2) from which a side wall (3) projects, which forms with said bottom (2) a compartment (4) for containing a predetermined dose of herbal tea plant preparation, the end of said side wall (3) most distal from said bottom (2) delimiting an upper opening of said compartment (4) through which a dose of herbal tea plant preparation and water for infusion is allowed to be introduced into said compartment (4);
- said containing body (5) comprises a discharge opening (6) for discharging liquid from said containing body (5); and
- a filtering element (7) is housed in said containing body (5) upstream of said discharge opening (6) to filter the liquid dispensed from said containing body (5) through said discharge opening (6),
**characterized in that**:
- said discharge opening (6) comprises at least a first section having a maximum passage area lower than or equal to 0.072 mm² and greater than or equal to 0.049 mm², so as to allow a controlled and slowed discharge of pressurized liquid from said compartment (4) and from said containing body (5) so as to ensure a sufficient infusion time of said dose of herbal tea plant preparation in said liquid inside said containing body (5) and
- said filtering element (7) has a filtering capacity of at least 150 µm, to filter and eliminate solid particles having a grain size greater than 150 µm from the filtered liquid.

2. Filter according to any one of claim 1, wherein said first section of said discharge opening (6) consists of:
- a single calibrated hole having a diameter D which satisfies the following relationship: 250 µm ≤ D ≤ 303 µm, or
- two distinct calibrated holes, each having a respective diameter D₁ and D₂ the summation of which satisfies the following relationship: 250 µm ≤ (D₁ + D₂) ≤ 303 µm.

3. Filter according to claim 1 or 2, wherein said discharge opening (6) is a discharge opening formed in said bottom (2).

4. Filter according to any one of claims 1 to 3, wherein:
- said bottom (2) has a concavity facing said compartment (4); and
- said discharge opening (6) is formed in a side concave portion of said bottom (2).

5. Filter according to any one of claims 1 to 4, wherein:
- said first section of said discharge opening having a maximum passage area lower than or equal to 0.072 mm² and greater than or equal to 0.049 mm² is formed in a disk inserted in a sealed manner between said bottom of the containing body and said filtering element; and
- in said bottom at least one draining passage is formed, preferably having an area of at least 5 mm², to allow the liquid to be drained by gravity from the bottom of said containing body.

6. Filter according to any one of claims 1 to 5, wherein said filtering element has a filtering capacity between 100 µm and 160 µm, preferably a filtering capacity of 150 µm.

7. Filter according to any one of claims 1 to 6, wherein said filtering element (7) is associated with a support element (9) positioned further inside said compartment (4) towards said bottom (2) with respect to said filtering element (7) and is provided with a plurality of openings/holes so as not to hinder the passage of liquid.

8. Filter according to any one of claims 1 to 7, wherein said filtering element (7) is a filtering membrane applied and supported by said support element (9) inside said compartment (4).

9. Filter according to any one of claims 1 to 8, wherein said filtering element (7) is the only filtering element provided in the compartment (4), and between said filtering element (7) and said upper opening of said compartment (4) no other liquid filtering means are provided.

10. **Machine** for preparing and dispensing herbal teas, comprising a machine body to which are associated:
- a dispensing device comprising a containing chamber extended in a prefixed axial direction between an upper opening and a bottom wall provided with an opening for dispensing liquid outwards;
- a hydraulic pump for pumping pressurized water into said containing chamber through said upper opening by a first pressurized water supply line;
- a second water supply line from a tank or a water mains to said hydraulic pump to supply pressurized water into said containing chamber; and
- heating means for heating the water pumped to said dispensing device through said water supply line,
**characterized in that** a filter (1) according to any one of claims 1 to 19 is housed in said containing chamber of said dispensing device, said filter (1) being inserted into said containing chamber so as to have:
- said bottom (2) positioned in proximity to said bottom wall of the containing chamber of said dispensing device; and
- said upper opening positioned in substantial proximity to the upper opening of the containing chamber of said dispensing device.

11. Machine according to claim 10, wherein said hydraulic pump:
- is dimensioned to pump into said containing chamber and into said compartment (4) of the containing body (5) of said filter (1) a flow rate of pressurized water greater than the flow rate of liquid dispensable through said at least one first section of said discharge opening (6) of said filter (1) and/or
- provides to pump water into said water supply line at a liquid pressure between 7 bars and 10 bars, preferably at a pressure between 8 bars and 9 bars.

12. Machine according to any one of claims 10 or 11, wherein said machine is an espresso coffee machine and said dispensing device is a filter holder of a machine for preparing espresso coffee.

13. **Process for preparing and dispensing herbal teas** from an herbal tea plant preparation by a machine according to any one of claims 10 to 12, said process comprising the steps of:
- arranging a machine according to any one of claims 10 to 12 provided with a filter according to any one of claims 1 to 9;
- arranging an herbal tea plant preparation;
- inserting a dose of said herbal tea preparation into said containing chamber inside the compartment (4) of the containing body (5) of said filter (1); and
- pumping heated pressurized water into the compartment (4) of the containing body (5) of said filter (1) at a liquid pressure between 7 bars and 10 bars, more preferably at a pressure between 8 bars and 9 bars, and with a flow rate of pressurized water greater than the flow rate of liquid dispensable through said at least one first section of said discharge opening (6) of said filter (1), to carry out a pressurized infusion step of said dose of said herbal tea preparation in said heated water, so as to produce a herbal tea dispensed through said discharge opening (6) of said containing body (5) and through said opening for dispensing liquid outwards of said dispensing device.

14. Process according to claim 13, wherein said dose of said herbal tea preparation inserted into said compartment (4) of the containing body (5) of said filter (1):
- is an amount between 1 g and 8 g of herbal tea preparation, preferably is an amount of herbal tea preparation between 1.5 g and 4 g of herbal tea preparation, more preferably an amount between 1.5 g and 2.5 g and
- consists of leaves, seeds, fruits, flowers, roots, bark and/or twigs used alone or in mixture with one another, also of different typologies of plants.

15. Process according to any one of claims 13 or 14, wherein said heated water pumped into said containing chamber has a temperature between 80°C and 99°C, preferably has a temperature between 85°C and 98°C, more preferably has a temperature between 89°C and 95°C.
